# FASCICULE DE BREVET EUROPEEN

(11) **EP 0 809 397 B1**
(45) Date de publication et mention de la délivrance du brevet: **08.03.2006**
(21) Numéro de dépôt: 97401130.6
(22) Date de dépôt: 23.05.1997
(51) Int. Cl.: H04N 5/232, H04N 7/26, H04N 7/30

(54) **Camera vidéo numérique à débit sensiblement constant et système de transmission utilisant une telle camera**
Digitale videokamera mit konstanter Bitrate und Übertragungssystem mit einer derartigen Kamera
Digital video camera with constant bitrate and transmission system using this camera

(30) Priorité: 24.05.1996 FR 9606507
(43) Date de publication de la demande: 26.11.1997
(73) Titulaire: THOMSON BROADCAST SYSTEMS, 95800 Cergy Saint-Christophe (FR)
(72) Inventeur: Halin, Pierre, 92648 Boulogne Cedex (FR)
(74) Mandataire: Rossmanith, Manfred

(56) Documents cités:
- EP-A- 0 448 311
- EP-A- 0 664 651
- WO-A-91/07850
- WO-A-95/11571
- WO-A-96/02106
- US-A- 4 485 398
- US-A- 5 138 459
- US-A- 5 144 424
- FERNSEH UND KINOTECHNIK, vol. 45, no. 6, 1 Janvier 1991, pages 293-296, XP000234649 POETSCH D: "EIN CCD-FILMABTASTER FUER 4:3 UND 16:9"
- IEEE TRANSACTIONS ON CONSUMER ELECTRONICS, vol. 39, no. 3, 1 Août 1993, pages 467-472, XP000396320 IMAIDE T ET AL: "A MULTIMEDIA COLOR CAMERA PROVIDING MULTI-FORMAT DIGITAL IMAGES"
- SMPTE JOURNAL, vol. 105, no. 1, 1 Janvier 1996, pages 13-30, XP000551997 PHORPE L J ET AL: "THE ALL-DIGITAL CAMCORDER - THE ARRIVAL OF ELECTRONIC CINEMATOGRAPHY"

## Description

La présente invention concerne un système de transmission de signal vidéo.

Plus particulièrement, l'invention s'applique à un système de transmission de signal vidéo constitué d'une caméra, d'une unité de contrôle et d'une ligne de transmission reliant la caméra à l'unité de contrôle.

Selon l'invention, le signal vidéo issu de la caméra est un signal numérique. Préférentiellement, la transmission du signal issu de la caméra est réalisée par une ligne utilisée de façon usuelle pour la transmission de signaux analogiques. Avantageusement, la ligne de transmission peut être une ligne de structure classique (câble coaxial ou triaxial, paire torsadée, ligne bifilaire, etc....) et dont la longueur peut varier de quelques centimètres à plusieurs kilomètres. A titre d'exemple, une ligne de transmission, selon l'invention, peut atteindre 3 km.

L'invention concerne aussi d'autres modes de réalisation, tel que, par exemple, le mode de réalisation où la transmission entre la caméra et l'unité de contrôle est réalisée par voie hertzienne.

Selon le mode de réalisation préférentiel de l'invention, le signal vidéo numérique est un signal de qualité "Broadcast". Par qualité "Broadcast" il faut entendre une représentation des données sous forme de signaux de luminance Y, de différence de couleur bleue CB et de différence de couleur rouge CR, codés sur 10 bits et au format 4:2:2. Il peut aussi s'agir de signaux de couleur rouge R, vert V et bleu B, codés sur 10 bits et au format 4:4:4.

L'invention concerne également d'autres modes de réalisation pour lesquels le nombre de bits sur lequel sont codées les données Y, CB, CR ou R, V, B est différent de 10. Ce nombre de bits peut alors être égal, par exemple, à 8 ou à 9.

Avantageusement, l'image restituée par le dispositif de réception est une image non détériorée quelle que soit la longueur de la ligne de transmission. Comme cela apparaîtra ultérieurement, un autre avantage de l'invention est de ne pas introduire de retard perceptible entre le moment où l'image est filmée et le moment où l'image est restituée. Il est alors possible de travailler quasiment en temps réel.

La présente invention concerne une caméra comprenant un dispositif de traitement permettant de transformer le signal lumineux qu'elle reçoit en un signal vidéo. Le dispositif de traitement comprend des circuits permettant de numériser le signal vidéo et la caméra comprend un sous-ensemble de circuits permettant d'assurer un débit sensiblement constant des données numériques issues du dispositif de traitement.

La présente invention est définie par la revendication 1.

D'autres caractéristiques et avantages de l'invention apparaîtront à la lecture d'un mode de réalisation préférentiel fait avec référence aux figures ci-annexées, parmi lesquelles :
- la figue 1 représente le schéma synoptique d'une caméra selon l'invention ;
- la figure 2 représente le schéma synoptique d'une unité de contrôle selon l'invention ;
- la figure 3 représente le schéma synoptique d'un système de transmission selon l'invention.

Sur toutes les figures les mêmes repères désignent les mêmes éléménts.

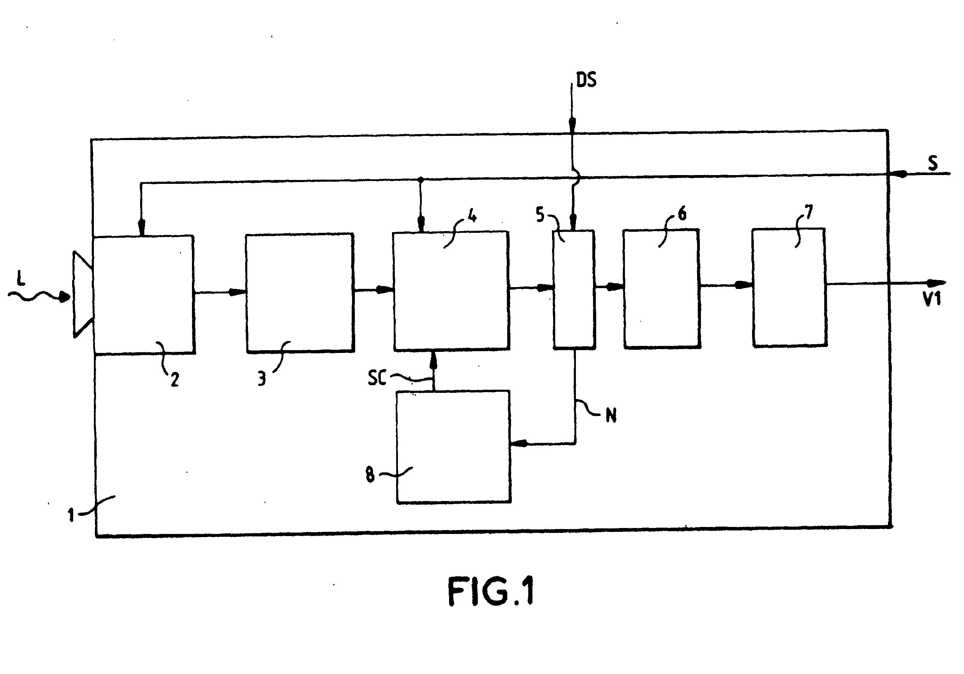

La figure 1 représente le schéma synoptique d'une caméra selon l'invention.

La caméra 1 comprend un dispositif d'analyse et de traitement 2, une zone de mémoire vidéo 3, un compresseur 4, une mémoire tampon 5, un circuit d'embrouillage 6, un circuit de modulation 7 et un circuit de régulation 8. Selon l'invention, les données issues du dispositif d'analyse et de traitement 2 sont des données vidéo numériques. Le dispositif d'analyse et de traitement 2, la zone de mémoire vidéo 3, le compresseur 4, la mémoire tampon 5, le circuit d'embrouillage 6 et le circuit de modulation 7 sont disposés en série. Le sous-ensemble constitué par la zone de mémoire vidéo 3, le compresseur 4, la mémoire tampon 5 et le circuit de régulation 8 constituent un système permettant d'assurer un débit constant des données numériques issues du dispositif de traitement 2.

Préférentiellement, le dispositif d'analyse et de traitement 2 permet de transformer le signal lumineux L reçu par la caméra en un signal vidéo numérique constitué des composantes Y, CB, CR au format 4:2:2, chaque composante étant codée sur 10 bits. Comme cela a été mentionné précédemment, l'invention concerne également, par exemple, un dispositif d'analyse et de traitement 2 permettant de transformer le signal lumineux L en un signal vidéo numérique constitué des composantes de couleur R, V, B au format 4:4:4, chaque composante étant codée sur 10 bits.

L'information issue du dispositif 2 est écrite dans la zone de mémoire vidéo 3 ligne par ligne. La zone de mémoire vidéo 3 est, par exemple, une mémoire de type RAM à double accès.

La zone de mémoire vidéo 3, le circuit de compression 4 et la mémoire tampon 5 comprennent chacun une entrée vidéo et une sortie vidéo. La mémoire tampon 5 comprend également une entrée de signaux auxiliaires et une sortie de commande. Le circuit de compression 4 comprend également une entrée de commande de compression et, préférentiellement, une entrée de commande de synchronisation. Le circuit de régulation 8 comprend une entrée de commande et une sortie de commande.

La sortie vidéo de la zone de mémoire vidéo 3 est reliée à l'entrée vidéo du compresseur 4 et la sortie vidéo du compresseur 4 est reliée à l'entrée vidéo de la mémoire tampon 5. La sortie de commande de la mémoire tampon 5 est reliée à l'entrée de commande du circuit de régulation 8 et la sortie de commande du circuit de régulation 8 est reliée à l'entrée de commande de compression du circuit de compression 4.

Selon le mode de réalisation préférentiel de l'invention, la compression effectuée par le circuit 4 est de mode JPEG et le nombre de lignes accumulées dans la zone de mémoire vidéo 3 est au minimum égal à 8. De façon plus générale, cependant, le mode de compression peut être différent du mode JPEG. Il peut s'agir, par exemple, de l'un quelconque des modes MPEG et, plus particulièrement, des modes MPEG à temps de traitement réduit , tel que , par exemple , le mode référencé MPEG-2 4:2:2 Profile Main Level (422@ ML) . Il est alors possible de travailler quasiment en temps réel, comme mentionné précédemment.

Selon le mode de réalisation préférentiel, dès que le nombre de lignes accumulées dans la zone de mémoire vidéo 3 atteint, par exemple, la valeur 8, le signal de commande SC issu de la sortie de commande du circuit de régulation 8 est appliqué au compresseur 4 de façon à déclencher la compression. De façon connue en soi, l'image est alors décomposée en blocs d'image de 8x8 échantillons correspondant à 8 points d'image de 8 lignes successives. Chaque bloc d'image subit, par exemple, une transformée cosinus discrète pour fournir des blocs transformés de 64 coefficients. Ces coefficients sont alors quantifiés selon des caractéristiques psycho-visuelles à l'aide de tables d'arrondi.

Selon le mode de réalisation préférentiel de l'invention, la quantification est effectuée à l'aide de tables d'arrondi invariables pendant la durée d'une trame d'image, soit 20 ms. De façon plus générale, l'invention concerne également les cas où la quantification est effectuée à l'aide de tables d'arrondis invariables pendant une durée égale à un nombre entier de fois la durée d'une trame d'image. Les données comprimées reçues du compresseur 4 sont envoyées dans une mémoire tampon 5. La mémoire tampon 5 est, par exemple, une mémoire de type RAM double accès ou encore une mémoire de type FIFO. La mémoire tampon 5 comprend un circuit de comptage, non représenté sur la figure 1. Le circuit de comptage a pour fonction de compter le nombre de fois N qu'il a été écrit dans la mémoire tampon 5 pendant la durée de l'opération de quantification, soit préférentiellement la durée d'une trame d'image (20ms). La grandeur N issu du circuit de comptage est appliquée à un circuit de comparaison, non représenté sur la figure, et situé en entrée du circuit de régulation 8. Le circuit de comparaison compare la valeur N a deux valeurs de seuil. Si N est supérieur à une première valeur de seuil, l'information issue du circuit de comparaison commande le circuit de régulation 8 de façon à accentuer le taux de compression. Si N est inférieur à une deuxième valeur de seuil de valeur inférieure à la première valeur de seuil, l'information issue du circuit de comparaison commande le circuit de régulation 8 de façon à diminuer le taux de compression. Lorsque N est compris entre les deux valeurs de seuil, le taux de compression reste inchangé.

A titre d'exemple, selon le mode de réalisation préférentiel, la première valeur de seuil correspond à 90% du nombre maximum de données qu'il est possible d'envoyer sur la ligne entre deux trames successives et la deuxième valeur de seuil correspond à 80% du nombre maximum de données qu'il est possible d'envoyer sur la ligne entre deux trames successives. Il s'ensuit que la compression des données n'est pas modifiée pour une valeur de N comprise entre 80% et 90% du nombre maximum de données qu'il est possible d'envoyer sur la ligne entre deux trames successives.

Selon une amélioration de l'invention, les processus d'augmentation et de diminution du taux de compression sont optimisés par la possibilité prévue de modifier la valeur des premier et deuxième seuils en prenant en compte l'évolution de la valeur de N elle-même.

Une telle possibilité peut être avantageusement envisagée lorsque la valeur de N varie souvent et dans des proportions non négligeables. Pour de forts accroissements de N, la valeur du premier seuil est alors diminuée et pour de fortes diminutions de N, la valeur du deuxième seuil est alors augmentée.

De façon préférentielle, le circuit de régulation 8 comprend un microprocesseur. La gestion de l'accroissement et de la diminution du taux de compression est alors effecutée par programmation.

A la mise en route, l'ensemble constitué par le compresseur 4, la mémoire tampon 5 et le circuit de régulation 8 démarre de façon à assurer un taux de compression élevé, tel que, par exemple, un taux de compression égal à 15, afin de ne pas risquer de saturer la transmission du signal. Après la mise en route, le circuit de régulation 8 asservit le taux de compression au contenu de l'image en fonction de la valeur de N. La durée de référence pour effectuer l'analyse qui conduit à l'asservissement des données comprimées est préférentiellement égal à la durée d'une trame, soit 20 ms.

Selon un perfectionnement de l'invention, un signal de synchronisation S est appliqué au dispositif d'analyse et de traitement 2 et au compresseur 4 de façon à caler en phase, par rapport à une référence de phase extérieure non représentée sur la figure 1, les données générées par ces circuits, permettant ainsi de réduire au maximum le délai de transmission des données.

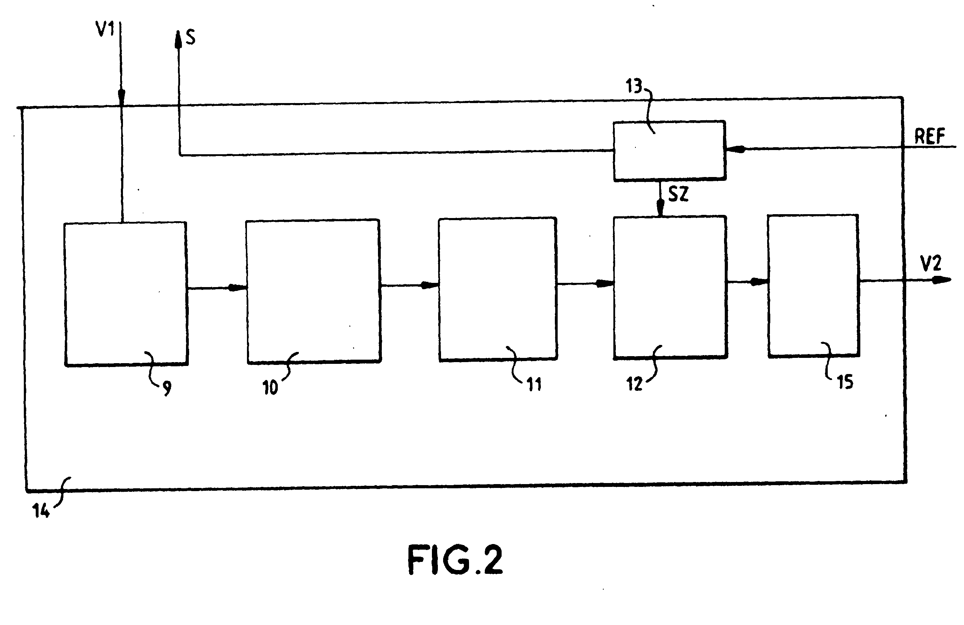

De façon plus générale, il faut noter que tous les circuits représentés aux figures 1 et 2 sont soumis, de façon connue en soi, à différents signaux de synchronisation et à différents signaux d'horloge qui ne sont pas représentés sur ces figures afin de ne pas alourdir les dessins.

Selon le mode de réalisation préférentiel de l'invention, le compresseur 4 fait appel à un codage connu de l'homme de l'art sous le nom de codage à longueur variable. Il est alors possible de réduire la taille des mots à forte probabilité. Préférentiellement, le compresseur 4 comprend un circuit de correction d'erreurs. Le signal issu de la mémoire tampon 5 est envoyé dans un embrouilleur 6 dont la fonction est de répartir de façon équiprobable la valeur des mots à transmettre et le signal issu de l'embrouilleur 6 est lui-même envoyé dans un modulateur numérique 7.

Différents types de modulation numérique peuvent être utilisés. La modulation d'amplitude classique (MA), la modulation d'amplitude à bande latérale unique (BLU) ou atténuée (BLA), la modulation d'amplitude en quadrature (MAQ) ou encore la modulation de phase multi-états (PSK). De façon plus générale, le modulateur numérique 7 selon l'invention concerne tout type de modulation à grande efficacité spectrale pour transmettre l'information sur un support à bande passante limitée.

Le modulateur numérique 7 comprend un dispositif de filtrage adapté de la bande de base avant modulation, tel qu'un filtre de Nyquist ou un filtre Gaussien. La porteuse est synchronisée au rythme des données élémentaires transmises.

Selon l'invention, le signal V1 issu de la caméra 1 peut contenir des données autres que celles issues de la détection du signal lumineux L. Comme représenté en figure 1, des données de service DS telles que des paramètres propres à la caméra ou encore des données de prise de son numérique peuvent être introduites dans la mémoire tampon 5 de façon à pouvoir transiter par la même voie que le signal vidéo. Ces données de service DS sont introduites dans la mémoire tampon 5 par l'intermédiaire de l'entrée de signaux auxiliaires mentionnée précédemment.

La figure 2 représente le schéma synoptique d'une unité de contrôle.

L'unité de contrôle 14 comprend, en série, un démodulateur 9, un désembrouilleur 10, un décompresseur 11, une zone de mémoire vidéo 12 et une interface de sortie vidéo 15. Préférentiellement, l'unité de contrôle 14 comprend aussi un dispositif de synchronisation 13 qui génère, sous l'action d'une référence temporelle extérieure REF, un signal de synchronisation SZ appliqué à la zone de mémoire 12 ainsi que le signal S appliqué à la tête de caméra décrite en figure 1.

Le signal SZ permet avantageusement de synchroniser le signal vidéo V2 issu de l'unité de contrôle 14 avec d'autres signaux vidéo, eux-mêmes synchronisés par rapport à la référence REF. Une telle référence REF s'avère opportune dans le cas où plusieurs sources de signaux vidéo sont utilisées simultanément.

Le démodulateur 9, le désembrouilleur 10 et le décompresseur 11 effectuent, respectivement, les opérations inverses des opérations effectuées par le modulateur 7, l'embrouilleur 6 et le compresseur 4. De même que la zone de mémoire vidéo 3, la zone de mémoire vidéo 12 est adaptée au mode de compression choisi. A titre d'exemple, la zone de mémoire vidéo 12 est une mémoire de type RAM à double accès qui, dans le cas d'une compression de mode JPEG, accumule un nombre de lignes égal, par exemple 8. Le signal issu de la zone de mémoire vidéo 12 est envoyé dans l'interface de sortie vidéo 15 dont la fonction est de mettre l'information vidéo issu de l'unité de contrôle au standard désiré. A titre d'exemple, l'interface de sortie vidéo 15 peut être un sérialiseur permettant de transformer les données numériques parallèles issues de la zone de mémoire vidéo 12 en données série, ou encore un convertisseur numérique analogique permettant de transformer les données numériques issues de la zone de mémoire 12 en signal analogique dont le standard peut être , à titre d'exemples , le standard PAL, SECAM ou NTSC. Selon un perfectionnement du mode de réalisation préférentiel de l'invention, il est avantageusement prévu que, lorsque N atteint, voire dépasse, le nombre maximum de données qu'il est possible d'envoyer sur la ligne entre deux trames successives, la zone de mémoire vidéo 12 restitue la même trame vidéo jusqu'à ce que soient rétablies des conditions normales de fonctionnement. Avantageusement, la continuité du signal vidéo est alors assurée en sortie de l'unité de contrôle. Afin de rétablir des conditions de fonctionnement normales, des taux de compression élevés, tels que ceux appliqués au démarrage, sont appliqués au compresseur 4.

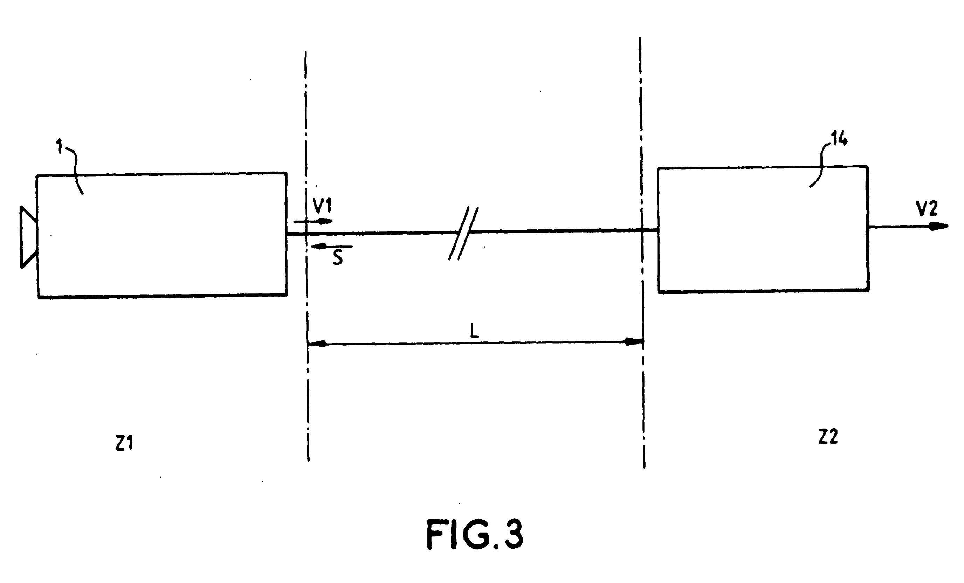

La figure 3 représente le schéma synoptique d'un système de transmission selon l'invention.

La tête de caméra 1 est située dans une première zone Z1 où est filmé l'événement. L'unité de contrôle est situé dans une deuxième zone Z2. Les zones Z1 et Z2 peuvent être dans le même studio de télévision mais elles peuvent aussi être géographiquement séparées de telle sorte que, par exemple, la zone Z2 soit dans un studio de télévision ou un car de reportage éloigné de l'événement filmé par la caméra 1.

Les zones Z1 et Z2 sont séparées par une distance L. Selon le mode de réalisation préférentiel, la transmission des signaux V1 et S, entre la caméra 1 et l'unité de contrôle 14 s'effectue par une ligne de transmission unique de structure classique telle qu'un câble coaxial ou triaxial, une paire torsadée ou une ligne bifilaire. Avantageusement, la longueur L de la ligne de transmission peut varier de quelques centimètres à plusieurs kilomètres.

A titre d'exemple, des images de qualité "Broadcast" au format 4:2:2, comprimées par une compression de norme JPEG, modulées par une modulation de type QAM 32 et véhiculées par un câble triaxial de diamètre 14 mm, peuvent être acheminées, sans altération visible et sans retard perceptible à l'oeil entre l'événement filmé et l'image restituée, sur une distance de l'ordre de 2 km avec un taux de compression de l'ordre de 4.

## Revendications

1. Caméra (1) pour la prise de vue d'images mobiles comprenant un dispositif d'analyse et de traitement (2) permettant de transformer le signal lumineux (L) qu'elle reçoit en un signal vidéo numérique et un sous-ensemble de circuits (3, 4, 5, 8) permettant d'assurer un débit sensiblement constant des données numériques issues du dispositif d'analyse et de traitement (2), et une sortie qui fournit un signal (V1) à une unité de contrôle, ledit sous-ensemble (3, 4, 5, 8) comprend en série une zone de mémoire vidéo (3), un compresseur (4) ayant une entrée de commande, une mémoire tampon (5) ayant une sortie de commande, ladite mémoire tampon (5) comprenant des moyens pour générer par ladite sortie de commande une information (N) permettant de commander le taux de compression du compresseur (4) et un circuit de régulation (8) ayant une entrée de commande et une sortie de commande, la sortie de commande de la mémoire tampon (5) étant reliée à l'entrée de commande du circuit de régulation (8) et la sortie de commande du circuit de régulation (8) étant reliée à l'entrée de commande du compresseur (4), **caractérisée en ce que** la zone de mémoire vidéo (3) comprend une mémoire dans laquelle les données numériques issues du dispositif de traitement (2) sont écrites ligne par ligne, le nombre de lignes accumulées dans la zone de mémoire vidéo (3) étant au minimum égal à 8, **en ce que** le compresseur (4) comprend des circuits travaillant en mode JPEG, **en ce que** lesdits moyens pour générer ladite information (N) sont constitués d'un circuit de comptage, ledit circuit de comptage permettant de compter le nombre de fois qu'il a été écrit dans ladite mémoire tampon (5) pendant la durée d'au moins une trame du signal vidéo, le circuit de régulation (8) comprenant un circuit de comparaison permettant de comparer ledit nombre de fois (N) à une première valeur de seuil de façon que si ledit nombre de fois (N) est supérieur à ladite valeur de seuil, ladite information (N) commande le circuit de régulation (8) de façon à accentuer le taux de compression, ou si le nombre de fois est inférieur à une deuxième valeur de seuil, ladite information commande le circuit de régulation de façon à diminuer le taux de compression.

2. Caméra (1) selon la revendication 1, **caractérisée en ce que** le circuit de régulation (8) comprend un microprocesseur.

3. Caméra (1) selon l'une quelconque des revendications 1 ou 2, **caractérisée en ce qu'**elle comprend un circuit embrouilleur (6) comprenant une entrée et une sortie et un modulateur numérique (7) comprenant une entrée et une sortie, l'entrée du circuit embrouilleur (6) étant reliée à la sortie vidéo de la mémoire tampon (5), la sortie du circuit embrouilleur (6) étant reliée à l'entrée du modulateur numérique (7), la sortie du modulateur numérique (7) fournissant le signal à destination de l'unité de contrôle.

4. Caméra (1) selon l'une quelconque des revendications 1 à 3, **caractérisée en ce que** le dispositif d'analyse et de traitement (2) comprend des circuits pour transformer ledit signal lumineux (L) en un signal vidéo numérique constitué des composantes de luminance (Y), de différence de couleur bleue (CB) et de différence de couleur rouge (CR) au format 4:2:2, chaque composante étant codée sur 10 bits.

5. Caméra (1) selon l'une quelconque des revendications 1 à 4, **caractérisée en ce que** le dispositif d'analyse et de traitement (2) comprend des circuits pour transformer ledit signal lumineux (L) en un signal vidéo numérique constitué des composantes de couleurs (R, V, B) au format 4:4:4, chaque composante étant codée sur 10 bits.

## Patentansprüche

1. Kamera (1) zur Aufnahme bewegter Bilder, die eine Analyse- und Bearbeitungsvorrichtung (2) enthält, die es erlaubt, das Helligkeitssignal (L) umzuwandeln, welches sie als digitales Videosignal empfängt, und eine Untergruppe von Schaltkreisen (3, 4, 5, 8) umfasst, die einen wesentlichen konstanten Datenfluss gestatten, der aus der Analyse- und Bearbeitungsvorrichtung (2) stammt, sowie einen Ausgang, der ein Signal (V1) an einen Steuerungskreis liefert, wobei die Untergruppe (3, 4, 5, 8) in Serie einen Videospeicherbereich (3) besitzt, einen Kompressor (4), der einen Steuerungseingang beinhaltet, einen Zwischenspeicher (5), der einen Steuerungsausgang beinhaltet, wobei der Zwischenspeicher (5) Mittel zur Erzeugung einer Information (N) durch den Steuerungsausgang beinhaltet, der es erlaubt, die Kompressionsrate des Kompressors (4) zu steuern und einen Regelkreis (8), der einen Steuerungseingang und einen Steuerungsausgang besitzt, wobei der Steuerungsausgang des Zwischenspeichers (5) mit einem Steuerungseingang des Regelkreises (8) verbunden ist und der Steuerungsausgang des Regelkreises (8) mit dem Steuerungseingang des Kompressors (4) verbunden ist,
**dadurch gekennzeichnet, dass**
der Videospeicherbereich (3) einen Speicher enthält, in dem die von der Bearbeitungsvorrichtung (2) gelieferten digitalen Daten Zeile für Zeile eingelesen werden, wobei die Zahl der gespeicherten Zeilen in dem Videospeicherbereich (3) mindestens 8 beträgt und dass der Kompressor (4) Schaltkreise beinhaltet, die nach dem JPEG Verfahren arbeiten, und dass die Mittel zur Erzeugung der Information (N) aus einem Zählerkreis gebildet werden, wobei der Zählerkreis die Zählung erlaubt, wie oft während der Dauer von mindestens einem Halbbild des Videosignals, in den Zwischenspeicher (5) eingelesen wurde, wobei der Regelkreis (8) einen Vergleicherkreis beinhaltet, der es erlaubt, die Häufigkeit (N) mit einem ersten Schwellenwert zu vergleichen, so dass, wenn die Häufigkeit (N) grösser als der Schwellenwert ist, die Information (N) den Regelkreis (8) ansteuert, um die Kompressionsrate anzuheben, oder wenn die Häufigkeit geringer als ein zweiter Schwellenwert ist, die Information den Regelkreis ansteuert, um die Kompressionsrate zu verringern.

2. Kamera (1) nach Anspruch 1,
**dadurch gekennzeichnet, dass**
der Regelkreis (8) einen Mikroprozessor enthält.

3. Kamera (1) nach den Ansprüchen 1 oder 2,
**dadurch gekennzeichnet, dass**
sie einen Mischkreis (6) enthält, der einen Eingang und einen Ausgang und einen digitalen Modulator (7) enthält, der einen Eingang und einen Ausgang aufweist, wobei der Eingang des Mischkreises (6) mit dem Videoausgang des Zwischenspeichers (5) verbunden ist, der Ausgang des Mischkreises (7) ist mit dem Eingang des digitalem Modulators verbunden, wobei der Ausgang des digitalen Modulators (7) das Signal an die Steuereinheit liefert.

4. Kamera (1) nach den Ansprüchen 1 bis 3,
**dadurch gekennzeichnet, dass**
die Analyse- und Bearbeitungsvorrichtung (2) Schaltkreise beinhaltet, um das Helligkeitssignal (L) in ein digitales Videosignal umzuwandeln, das aus den Komponenten Helligkeit (Y), Farbdifferenz blau (CB) und Farbdifferenz rot (CR) im Format 4:2:2 besteht, wobei jede Komponente im 10 Bitformat kodiert ist.

5. Kamera (1) nach den Ansprüchen 1 bis 4,
**dadurch gekennzeichnet, dass**
die Analyse- und Bearbeitungsvorrichtung (2) Schaltkreise enthält, um das Helligkeitssignal (L) in ein digitales Videosignal umzuwandeln, das aus den Komponenten rot, grün, blau (R, V, B) im Format 4:4:4 besteht, wobei jede Komponente im 10 Bitformat kodiert ist.

## Claims

1. Camera (1) for recording moving pictures comprising an analysis and processing device (2) for converting the light signal (L) which it receives into a digital video signal and a sub-unit (3, 4, 5, 8) for ensuring a substantially constant rate of the digital data output by the analysis and processing device (2) and an output delivering a signal (V1) to a control unit, said sub-unit (3, 4, 5, 8) comprises in series a video memory area (3), a compressor (4) having a control input, a buffer memory (5) having a control output, said buffer memory (5) comprises means to generate, via the said control output, a data item (N) for controlling the compression factor of the compressor (4), a regulating circuit (8) having a control input and a control output, the control output of the buffer memory (5) being connected to the control input of the regulating circuit (8), and the control output of the regulating circuit (8) being connected to the compression control input of the compressor (4),
**characterized in that** the video memory area (3) comprises a memory in which the digital data output by the processing device (2) are written line by line, the number of lines accumulated in the video memory area (3) being at least equal to 8, **in that** the compressor (4) comprises circuits operating in JPEG mode, **in that** the said means to generate the said data item (N) consist of a counting circuit, the said counting circuit making it possible to count the number of times which the said buffer memory (5) has been written to over the duration of at least one frame of the video signal, the regulating circuit (8) comprising a comparison circuit for comparing the said number of times (N) with a first threshold value so that, if the said number of times (N) is greater than the said threshold value, the said data item (N) commands the regulating circuit (8) so as to accentuate the compression factor, or if the number of times is less than a second threshold value, the said data item commands the regulating circuit so as to reduce the compression factor.

2. Camera (1) according to Claim 1,
**characterized in that** the regulating circuit (8) comprises a microprocessor.

3. Camera (1) according to any one of claims 1 or 2,
**characterized in that** it comprises a shuffler circuit (6) comprising an input and an output, and a digital modulator (7) comprising an input and an output, the input of the shuffler circuit (6) being connected to the video output of the buffer memory (5), the output of the shuffler circuit (6) being connected to the input of the digital modulator (7), the output of the digital modulator (7) delivering the signal to the control unit.

4. Camera (1) according to any one of claims 1 to 3,
**characterized in that** the analysis and processing device (2) comprises circuits for converting the said light signal (L) into a digital video signal consisting of the luminance (Y), blue colour difference (CB) and red colour difference (CR) components in 4:2:2 format, each component being coded over 10 bits.

5. Camera (1) according to any one of Claims 1 to 4,
**characterized in that** the analysis and processing device (2) comprises circuits to convert the said light signal (L) into a digital video signal consisting of the colour components (R, V, B) in 4:4:4 format, each component being coded over 10 bits.
